# EUROPEAN PATENT APPLICATION

(11) **EP 1 496 488 A1**
(43) Date of publication of application: **12.01.2005**
(21) Application number: 03720917.8
(22) Date of filing: 17.04.2003
(51) Int. Cl.: G09F 13/04, F21V 7/10, F21V 13/10, H01L 33/00

(54) **SURFACE LIGHT EMITTING DEVICE**

(30) Priority: 17.04.2002 JP 2002114801; 17.04.2003 JP 2003112423
(71) Applicant: Kabushiki Kaisha Box, Tokyo 107-0062 (JP)
(72) Inventor: YAMAUCHI, Toshio, Fujisawa-shi, Kanagawa 251-0055 (JP)
(74) Representative: Prechtel, Jörg, Dipl.-Phys. Dr.
(86) International application number: PCT/JP2003/004895
(87) International publication number: WO 2003/088195

(57) **Abstract**

A reflector 3 having a bottom section 4 and a slope section 13 surrounding the periphery of the bottom section 4 is provided, and an LED 5 is mounted on the center of the bottom section 4. A holder section 9 of a light control means 7 is detachably mounted to cover a lens 6 of the LED 5, while a circular plate section 18 of the light control means 7 is provided with a main reflecting section 11 and a reflecting transmission section 12. The main reflecting section 11 is designed to reduce the transmission amount from the LED 5, thereby causing most of the light to reflect on the reflector 3 side. On the other hand, the reflecting transmission section 12 permits a larger amount of transmission than in the main reflecting section 11. In this manner, it is possible to realize substantially uniform brightness in the entire upper section of the reflector 3 by the light transmitted through the main reflecting section 11 and the reflecting transmission section 12 and the light diffusely reflected from the reflector 3.

## Description

### BACKGROUND OF THE INVENTION

### 1. Field of the Invention

The present invention relates to a surface emission device used in an decorative illumination sign board, an electric light display device and the like, and more particularly, to a surface emission device which permits a surface-shaped light emission using a subjacent LED provided directly below a diffusion panel. A subjacent type means here the positional relationship in which the light source is situated below the diffusion panel in the case where the diffusion panel and the light source are vertically arranged. When the diffusion panel is set up and an observer takes his position in front of the diffusion panel, this means the positional relationship in which the light source is situated at the back of the diffusion panel. The direction in which the light from the light source advances along the optical axis is hereinafter referred to as the front.

### 2. Description of the Prior Art

Known as a surface emission (light emitting) device used in the decorative illumination sign board and the like are an edge light type in which a light source is provided on the side and a subjacent type in which the light source is provided at the back of a diffusion panel. The edge light type is arranged in such a manner that light is introduced to a light guiding panel disposed behind the diffusion panel from a bar-shaped light source disposed on the side of the light guiding panel to produce a surface light emission. On the other hand, the subjacent type is arranged in such a manner that the source of light directly illuminates the diffusion panel. It is also known that the LED is used as the light source.

In the case of the edge light type, an expensive light guiding panel is used. Accordingly, the larger the area, the more expensive the panel. Further, since the introduction path of light from the light source to a light emitting surface is long and the attenuation increases accordingly, it is necessary to provide a stronger source of light. This not only drives up costs, but also makes a device larger because the light source must be provided on the side.

On the other hand, in the case of the subjacent type, a distance between the light source and the diffusion panel is small. Accordingly, an unevenness is caused in the brightness of the diffusion panel in that the shape of the light source is visible through the diffusion panel and as a result, it is not possible to obtain a surface-shaped light emitter having a uniform light emitting surface. When a more-even brightness is required, the distance between the diffusion panel and the light source must be increased. In this case, it becomes dark as a whole and the device becomes thick and large. Further, in the case where a heat generating light source is used, the diffusion panel must be kept away from the light source. Accordingly, there is still the same problem as above.

### SUMMARY OF THE INVENTION

It is therefore an object of the present invention to provide an inexpensive compact surface emission device of a subjacent type which can obtain a sufficiently bright surface-shaped light emitter.

To solve the above-mentioned problems, a surface emission device of a subjacent type according to claim 1 is provided, in which a semitransparent diffusion panel is provided in front of a source of light and the diffusion panel is caused to face light emitted by the light from the light source, the surface light emitting device comprising an LED used as the light source, a reflector for reflecting the light from the LED, and a light control means provided between the LED and the diffusion panel, wherein the light control means comprises a main reflecting section which reflects and transmits the light of the LED and is provided at a position corresponding to a central portion of the LED to make the amount of reflection larger than the amount of light transmission, and a reflecting transmission section which is provided around the main reflecting section to make the amount of light transmission larger than in the reflecting main section.

The surface emission device of claim 2 according to claim 1 is characterized in that the LED is a lens type, and the light control means is provided with a holder section adapted to cover the external surface of the LED lens and is detachably provided relative to the LED by the holder section.

The surface emission device of claim 3 according to claim 1 is characterized in that the light control means is integrally formed with the LED.

The surface emission device of claim 4 according to claim 1 is characterized in that the reflector is provided with a slope section, and the main reflecting section and the reflecting transmission section of the light control means are situated lower than the uppermost (highest) section of the slope section.

The surface emission device of claim 5 according to claim 4 is characterized in that the light control means is a plate-shaped member which is supported on the slope section of the reflector.

The surface emission device of claim 6 according to one of claims 1 through 5 is characterized in that a structure of the reflector consisting of a bottom section on which the LED is mounted and a slope section surrounding the periphery of the bottom section forms one unit of a circular or substantially regular polygonal shape as seen from the direction of an optical axis of the LED, wherein the reflector is composed of one or more units each provided with the LED and the light control means.

According to the invention of claim 1, the light control means is provided between the diffusion panel and the LED and is provided with the main reflecting section and the reflecting transmission section. In this manner, it is possible to average the amount of light in a light diffused reflection area and a transmitting diffused reflection area which are formed between the LED and the diffusion panel. As a result, the brightness of the diffusion panel becomes the entirely uniformized surface-shaped (light) emission.

Further, since the light control means is interposed between the diffusion panel and the LED and the amount of heat generation of the LED is small, it is possible to situate the LED serving as the light source near the diffusion panel. As a result, the entire brightness can be sufficiently secured and the device can be made thin and compact as a whole. Further, the cost can be reduced because a specific LED is not used.

According to the invention of claim 2, the light control means is separately made from the LED and is detachably mounted on the outer surface of the lens section of the LED of a lens shape by the holder section. In this manner, the LED is not a special one, but is commercially available from the marketplace and as a result, the surface emission (light emitting) device can be easily constructed.

According to the invention of claim 3, the light control means is integrally formed with the LED. Accordingly, it is not necessary for the light control means to be separately formed before installation, and the structure and assembling of the device can be made easy.

According to the invention of claim 4, the reflector is provided with a slope section, wherein the position of the reflecting main section and the reflecting transmission section of the light control means is set lower than the uppermost section of the slope section. Accordingly, it is possible to sufficiently introduce the diffused reflection light from the slope section of the reflector into the transmitting diffused reflection area where a space is formed between the diffusion panel and the light control means. In this manner, it is also possible to uniformize the amount of light in the diffused reflection area which is the space formed between the diffusion panel and the upper part of the slope section and in the transmitting diffused reflection area above the light control means. Thus, the brightness of the entire diffusion panel can be uniformized.

According to the invention of claim 5, the light control means is placed on the reflector and has the periphery thereof supported by the slope section of the reflector. In this manner, it is possible to easily install and position the light control means.

According to the invention of claim 6, a basic structure of the reflector consisting of the bottom section and the slope section forms one unit of a circular or substantially regular polygonal shape as seen from the direction of an optical axis of the LED, wherein one or more units each provided with the LED and the light control means are combined to assemble the device. In this manner, it is possible to form the surface light emitting device of a free size in response to popular demand. Since the unit is formed in the circular or substantially regular polygonal shape, the brightness of each unit is entirely uniformized. Accordingly, even though a surface emission device of any size is constructed by combining these units, a uniform brightness can be realized as a whole.

### BRIEF DESCRIPTION OF THE DRAWINGS

Fig. 1 is a perspective view of a surface emission (light emitting) device according to a first embodiment;
Fig. 2 is a partially enlarged cross-sectional view taken along the line 2-2 of Fig. 1;
Fig. 3 is a view showing the installation of a light control means;
Fig. 4 is a view showing the light control means from various angles;
Fig. 5 is a view showing an operation;
Fig. 6 is a view showing a reflector from the front;
Fig. 7 is a cross-sectional view taken along the line 7 - 7 of Fig. 6;
Fig. 8 is a surface emission device constructed of only one unit according to a second embodiment;
Fig. 9 is an exploded view of a substantial part according to a third embodiment;
Fig. 10 is a top view of the third embodiment;
Fig. 11 is a cross-sectional view showing the installation condition according to the third embodiment;
Fig. 12 is a view showing the construction of one unit according to the third embodiment;
Fig. 13 is a perspective view of a fourth embodiment;
Fig. 14 is a top view of an umbrella section according to the fourth embodiment; and
Fig. 15 is a view showing a light control means and an LED according to a fifth embodiment.

### DETAILED DESCRIPTION OF THE PREFERRED EMBODIMENTS

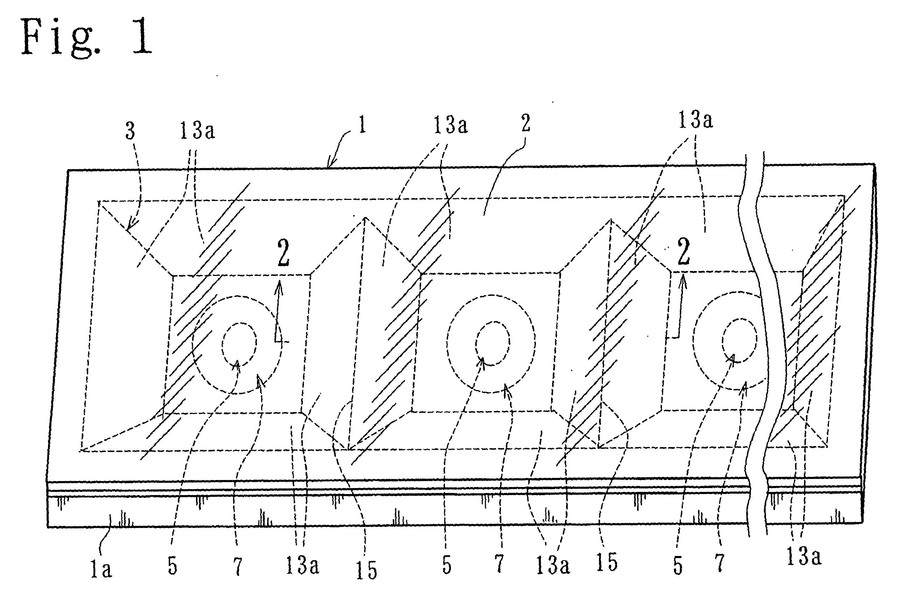

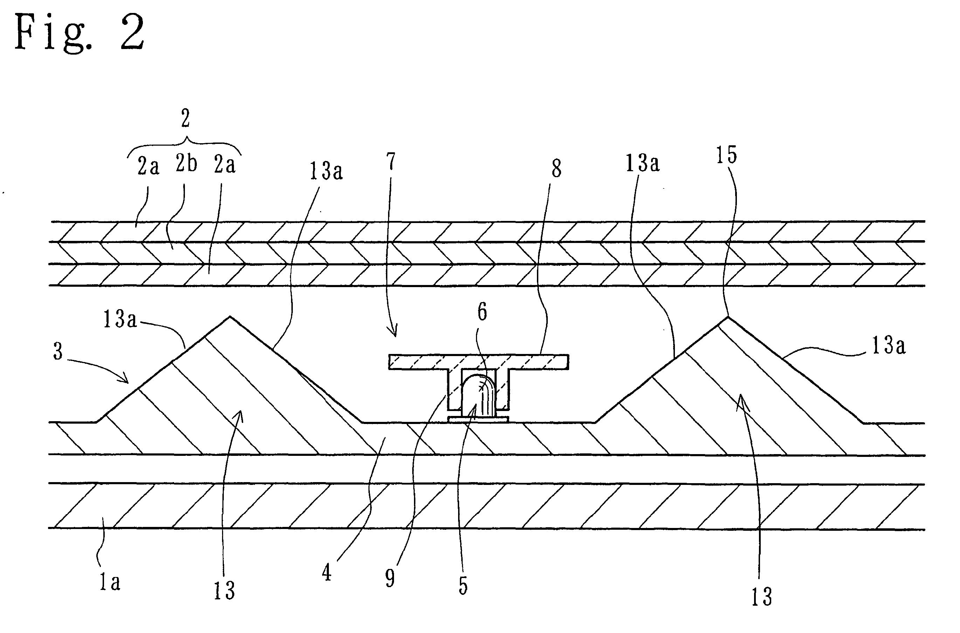

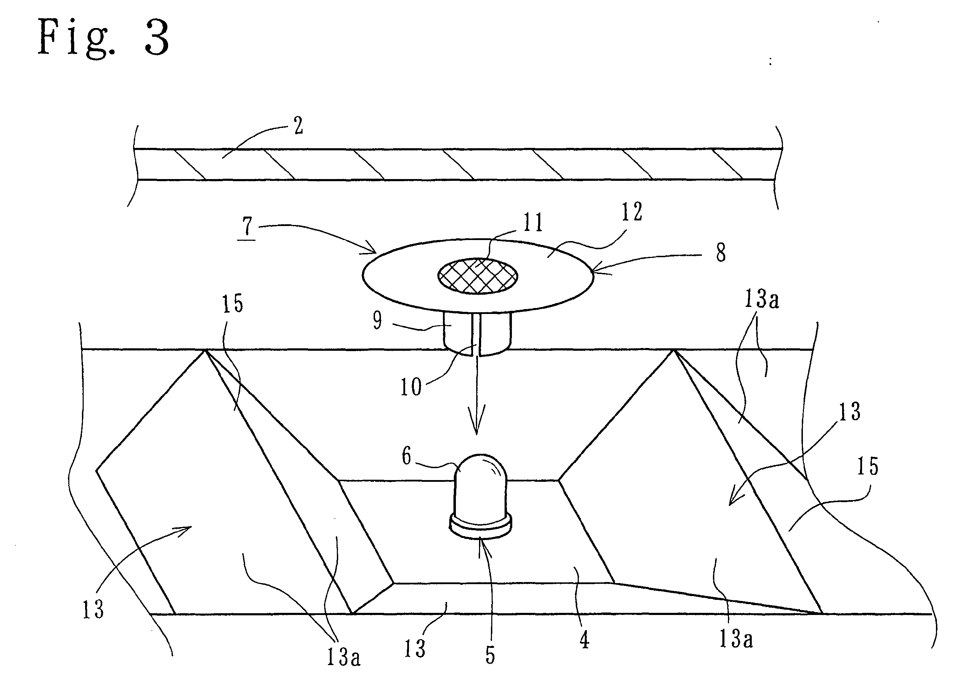

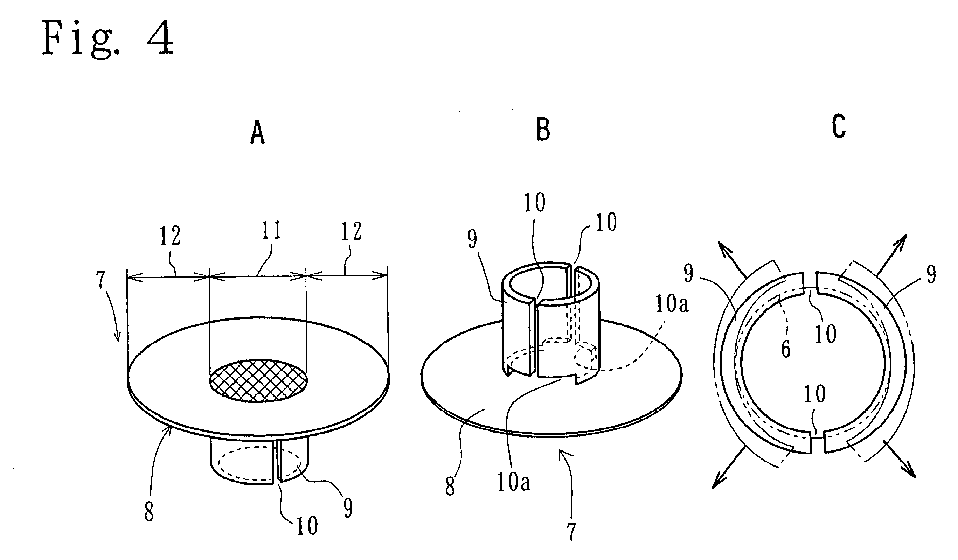

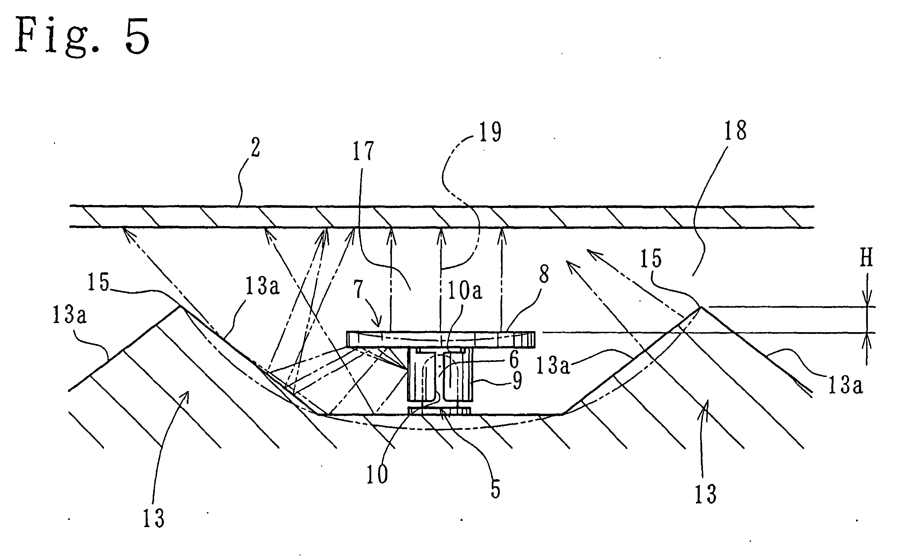

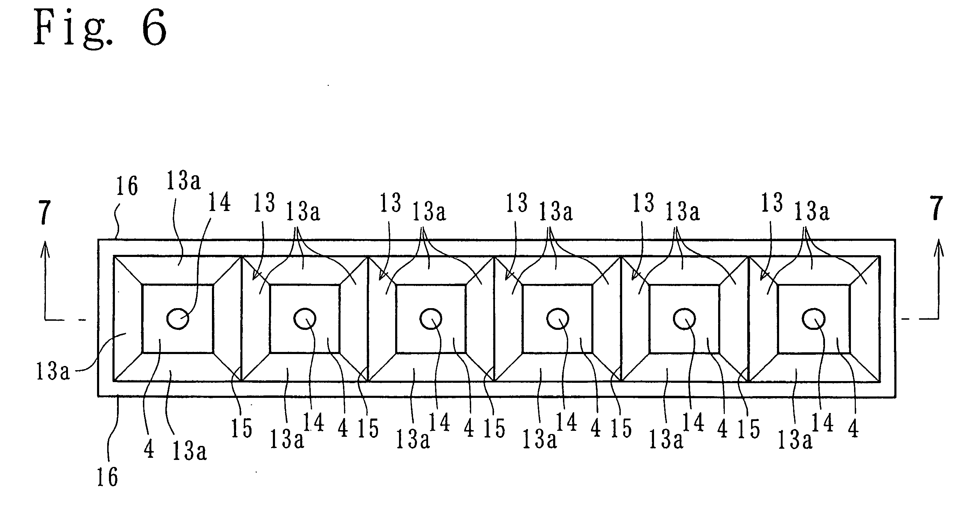

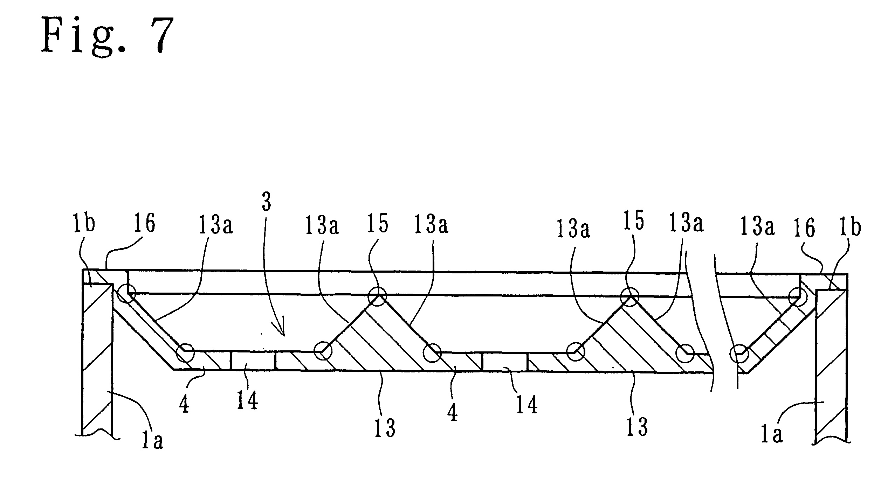

One embodiment of the present invention will now be described with reference to the accompanying drawings. Figs. 1 through 7 relate to a first embodiment, wherein Fig. 1 is a perspective view of a surface emission (light emitting) device and Fig. 2 is a partially exploded cross-sectional view taken along the line 2-2 of Fig. 1. Fig. 3 is a view showing the installation of a light control means, Fig. 4 is a view showing the light control means from various angles, and Fig. 5 is a view showing the operation of the light control means. Fig. 6 is a view showing a reflector from a diffusion panel side and Fig. 7 is a cross-sectional view taken along the line 7-7 of Fig. 6. In the present invention, the light advancing along an optical axis of LED is referred to as the front.

In Fig. 1, a surface emission (light emitting) device 1 is provided with a casing 1a formed in a rectangular parallelepiped to be used as an electric light guiding means and the like and a diffusion panel 2 for covering an opening section of the casing 1a. The casing 1a is made of suitable material such as metal or resin (plastic) comparatively having rigidity. When used in the open air, the casing 1a is made of a material superior in water resistance and weather resistance.

The diffusion panel 2 is made of suitable material such as semitransparent glass and resin. The diffusion panel 2 can be colored as desired, but it can be colorless. It should be noted that the diffusion panel 2 must be semitransparent to be able to diffuse the light from a source of light. The diffusion panel 2 is produced by such a known method in that the construction material itself is semitransparent, direct printing is effected on the transparent material, or another semitransparent film is laminated on the transparent material.

As shown in Fig. 2, a reflector 3 is housed in the casing 1a and a LED 5 is mounted on a bottom section 4 of the reflector 3. The reflector 3 is integrally formed with a substrate and is electrically connected to an electric circuit integrated with the reflector 3 at the same time as the installation of the LED 5. In this manner, the reflector 3 emits light when being energized by a power source (not shown). The LED 5 is a lens type having a lens 6. Any light emitting (emission) color such as white can be used. The diffusion panel 2 in the present embodiment has a laminated structure whereby a semitransparent film 2b is inserted between a pair of transparent sheets 2a, 2a.

Mounted on the outer surface of the lens 6 of the LED 5 is a light control means 7. The light control means 7 is made of suitable resin material such as ABS and is integrally provided with a circular plate section 8 and a cylindrical holder section 9 which projects from the central section of the circular plate section 8.

As shown in Figs. 3 and 4, the holder section 9 is provided with a pair of slits 10 and 10 from the tip of the holder section 9 toward the circular plate section 8 side. The pair of slits 10 is formed at intervals of 180 degrees, but the interval or the number of the slits 10, 10 can be set optionally. The base section of the slits 10, 10 near the circular plate section 8 extends to slits 10a, 10a formed in the peripheral direction of the holder section 9. The holder section 9 is continuously integrated with the circular plate section 8 between the slits 10a and 10a.

As shown in Fig. 4C, the inner diameter of the holder section 9 is smaller than the outer diameter of the lens 6 of the LED. Accordingly, when the holder section 9 is mounted on the outer surface of the lens 6, it can be elastically deformed outward by the existence of the slits 10, 10 to be closely mounted on the outer surface of the lens 6. In this case, the elastic deformation of the holder section 9 is further facilitated by the existence of the slits 10a, 10a formed in the peripheral direction.

Fig. 4A is a perspective view showing the light control means 7 from the surface side (i.e., the front side; hereinafter referred to as the surface side) and Fig. 4B is a view showing the reversed condition thereof. Fig. 4C is a view showing the holder section 9 in the reverse side.

As shown in Fig. 4A, the circular plate section 8 is provided with a reflecting main section 11 situated right on the LED 5 and a reflecting transmission section 12 forming the periphery of the reflecting main section 11. The reflecting main section 11 is designed to make the amount reflected onto the reflector 3 side larger than the transmitted amount of light of the LED 5. The reflecting transmission section 12 is designed to make the transmitted amount larger than in the reflecting main section 11.

The amount of light transmitted in the light control means 7 can be adjusted by forming an impermeable layer of light on the surface of the transparent or semitransparent material and by changing the thickness of the semitransparent material. There is for example dot printing as a means for forming the impermeable layer of light, wherein the light transmission amount can be adjusted by changing the dot density. Formation of such a dot layer can also be realized by a method other than printing, for example, by performing vapor-deposition in a dot shape. The dot printing also includes printing by an ink jet printer.

In this case, the dot density can be adjusted in two stages by making it dense at the reflecting main section 11 and by making it less dense at the reflecting transmission section 12. The dot density can also be more finely adjusted by grading for continuous or staged change. Further, the film processed in this manner can also be laminated on the circular plate section 8 by sticking or some other method.

The light transmission amount can be adjusted not only by forming the dot layer, but also by forming an impermeable layer of a film shape to change the thickness of film. In this case, the impermeable layer can be formed by solid printing of a non-dot shape, vapor deposition plating and the like, wherein the reflecting main section 11 can be made thick, while the reflecting transmission section 12 can be made thin. In each case, it is necessary to make the reflectance better on the circular plate section 8, in particular, on the reverse side of the reflecting main section 11 serving as the light source side.

The size of the circular plate section 8 can be set optionally depending on the relationship between the diffusion panel 2, the reflector 3, and the LED 5, the brightness required for the diffusion panel 2, and the like. For example, the circular plate section 8 can be made to substantially cover the entire bottom section 4 to the extent that it touches internally (inscribes) a contour of the bottom section 4. Further, as shown in Fig. 2, the circular plate section 8 can be made smaller.

As shown in Figs. 6 and 7, the reflector 3 is made of suitable material with high reflectance such as aluminum deposited resin or metal and is provided with a slope section 13 surrounding the periphery of the bottom section 4. The bottom section 4 and the slope section 13 surrounding the bottom section 4 forms one unit and the optional number of units is continuously formed when needed. In the present embodiment, six units are provided sideways.

The bottom section 4 is square as seen from the front and is provided in the center with a hole 14 for mounting the LED 5. The condition including the slope section 13a which surrounds the periphery of the bottom section 4, that is, the shape in one unit is also square. A boundary of the slope sections 13a, 13a formed on each side of the slope section 13 forms a ridgeline 15, wherein the adjacent slope sections 13, 13 relative to the ridgeline 15 form a pyramid shape.

The periphery of the reflector 3 is provided with an outward flange 16 to be superposed on an upper edge section 1b of the casing 1a. The joint section between the outward flange 16 and the upper edge section 1b of the casing 1a and between the outward flange 16 and the diffusion panel 2 are tightly waterproofed by a sealing means (not shown). The outward flange 16 is situated higher than the ridgeline 15. As shown in Fig. 7, a boundary section between the outward flange 16 and the slope section 13, a boundary section between the adjacent slope sections 13 and 13, a boundary section between the slope section 13 and the bottom section 4, and a bending section of the outward flange 16 (each shown by a circle mark) can be made rounded. Further, as shown in Fig. 5, the slope section 13 and the bottom section 4 can be made concave or convex respectively from the viewpoint of reflecting efficiency. An imaginary line in the figure shows a case where the concave shape is adopted.

As shown in Fig. 5, the ridgeline 15 is situated away from and below the diffusion panel 2. The circular plate section 8 is situated lower than the ridgeline 15 by a dimension H. The relation of height is important in the present embodiment to obtain the uniform surface emission, but the dimension can be arbitrarily changed by the adopted structure and the like. The height relation varies with the shape change of the circular plate section 8. For example, the height of the edge of the circular plate section 8 and the top of the ridgeline 15 can be made substantially equal. The height means the dimension from the bottom section 4 to a predetermined section projecting to the side of the diffusion panel 2.

The circular plate section 8 can be made curved. For example, as shown in Fig. 5 by an imaginary line, one surface of the circular plate section 8 can be made concave to make the diffusion of light strong. The curved surface can also be formed on each side of the circular plate section 8. The circular plate section 8 can be easily formed to have such a curved surface by changing the LED 5 to a chip type of LED. The space between the circular plate section 8 and the diffusion panel 2 right above the circular plate section 8 is a transmitting diffused reflection area 17, and the space around the transmitting diffused reflection area becomes a light diffused reflection area 18. The diffused reflection area 18 is formed up to the upper section of the ridgeline 15.

An operation of the present embodiment will now be described. In Fig. 5, when the LED 5 is energized to emit light, the light of the LED 5 diffuse with a central focus on the optical axis 19. However, in the section right above the LED 5 where the amount of light is highest, the main reflecting section 11 of the circular plate section 8 controls the amount of light transmission. In this case, most of the light is reflected on the side of the bottom section 4 and the slope section 13 of the reflector 3.

The light directly emitted to the bottom section 4 and the slope section 13a from the LED 5 and the light reflected by the reflecting main section 11 are reflected diffusely to extensively expand above the reflector 3. In the reflecting transmission section 12 of the circular plate section 8, the amount of light directly coming from the LED 5 is reduced to a certain degree unlike the main reflecting section 11 situated directly above the LED 5. Accordingly, the amount of transmission is set larger than in the reflecting main section 11. However, since there is a certain degree of reflection, the light is reflected diffusely in the same manner as above on the reflector 3 side.

As a result, a substantially uniform amount of light is obtained in the transmitting diffused reflection area 17 and the diffused reflection area 18 by the light transmitted through the reflecting main section 11, the light transmitted through the reflecting transmission section 12, the light transmitted through the reflecting transmission section 12 after reflecting diffusely, the light reached the diffused reflection area 18, the light reaching the transmitting diffused reflection area 17 after being reflected from the slope section 13 which is situated higher than the circular plate section 8 on the diffused reflection area 18 side and the like. In this manner, the brightness of the diffusion panel 2 is made uniform on all surfaces.

Since each unit of the reflector 3 is formed square, the distance from each corner section and the central source of light is equal in every direction. Accordingly, even surface emission condition is realized for each unit and as a result, uniform surface emission is obtained from the entire surface emission device 1 formed by a series of units.

The LED 5 serving as the light source can be situated closer to the diffusion panel 2 by interposing the light control means 7 therebetween and because of a lower heat generation amount of the LED 5. In this manner, it is possible to make the entire brightness sufficient and the device can be made thin and compact as a whole. The cost can also be reduced because it is not necessary to use any special LED.

In addition, the light control means 7 is separately made from the LED 5 and is detachably mounted on the outer surface of the lens 6 of the lens type LED 5 by the holder section 9 thereof. In this manner, the light control means 7 can be made at a low cost. Further, since the LED 5 is not a special one, but is commercially available, it is possible to make the surface emission device simple.

Further, the reflector 3 is provided with the slope section 13, and the reflecting main section 11 and the reflecting transmission section 12 of the light control means 7 are situated lower than the ridgeline 15 which is the uppermost section of the slope section 13. In this manner, the diffused reflection light from the slope section 13 of the reflector 3 can be introduced to the transmitting diffused reflection area 17 which is the space formed between the diffused panel 2 and the light control means 7. As a result, the boundary between the transmitting diffused reflection area 17 and the diffused reflection area 18 can be removed. Accordingly, it is possible to uniformize the amount of light in the diffused reflection area 18 which is the space formed between the diffused panel 2 and the upper section of the slope section 13 and in the transmitting diffused reflection area 17 above the light control means 7. As a result, it is possible to make the entire brightness of the diffused panel 2 uniform.

The basic structure of the reflector 3 consisting of the bottom section 4 and the slope section 13 forms one unit of a square shape when seen from the front. A plurality of units, each provided with the LED 5 and the light control means 7, is combined to assemble the device. In this manner, it is possible to form the surface emission device 1 of any size in response to popular demand. By making the surface emission device square, the brightness in each unit becomes uniform as a whole. Accordingly, even though these units are combined to make a surface emission device of any size, it is possible to realize uniform brightness as a whole.

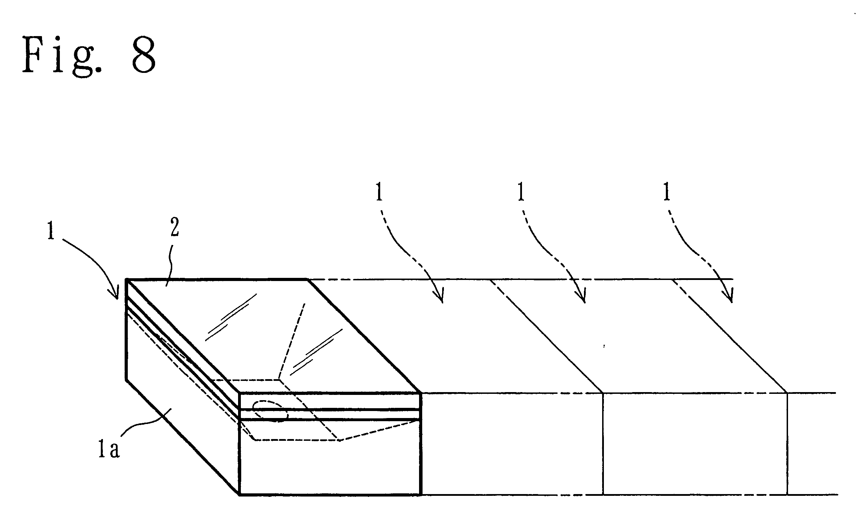

Fig. 8 is a second embodiment in which the surface emission (light emitting) device 1 of a minimum structure formed only by one unit is shown. In this example, each of the casing 1a, the diffusion panel 2, and the reflector 3 forms a square. The reflector 3 corresponds to that formed as only one unit in Figs. 6, 7. If the required number of units is freely lined up and integrated in every direction according to need, a surface emission device of a given size is obtained. It is to be noted that the casing 1a and the diffusion panel 2 can be a single one having a predetermined shape and dimension for exclusive use.

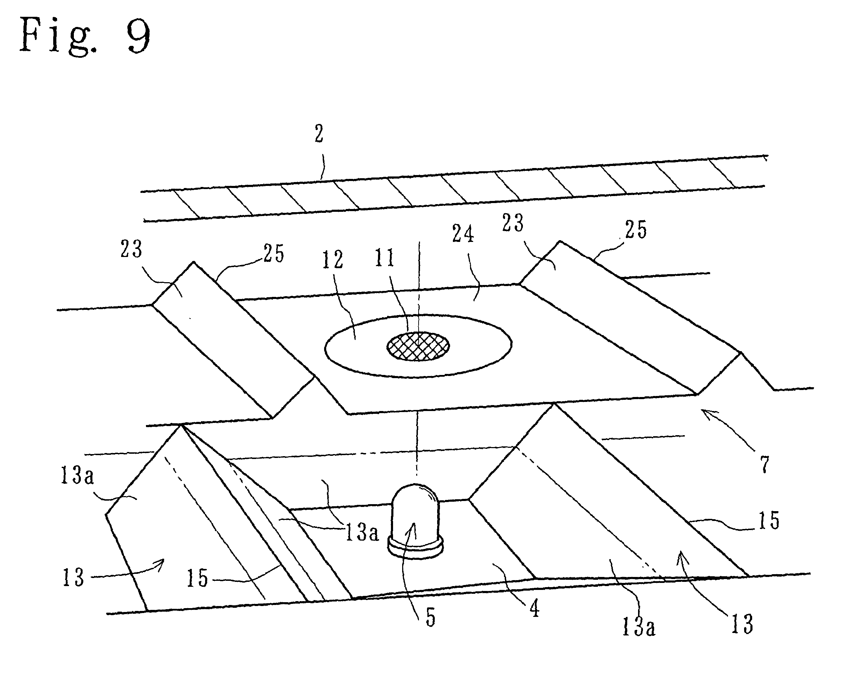

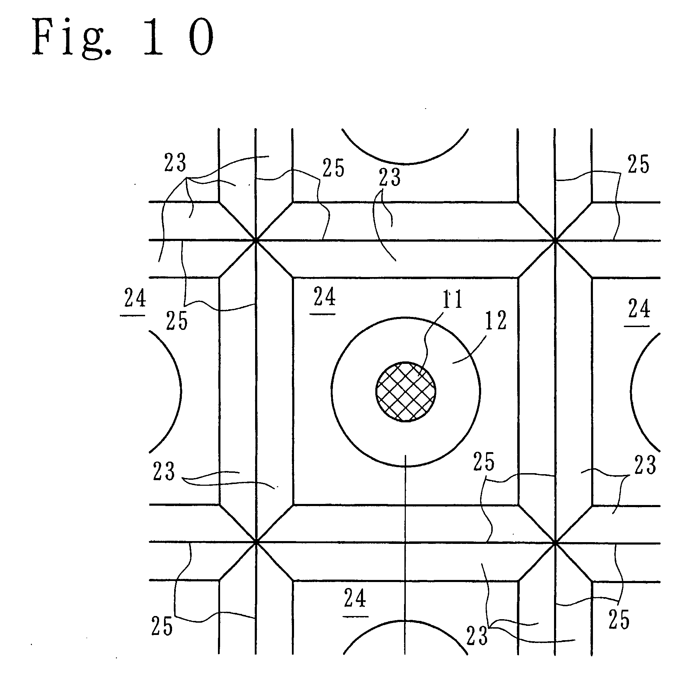

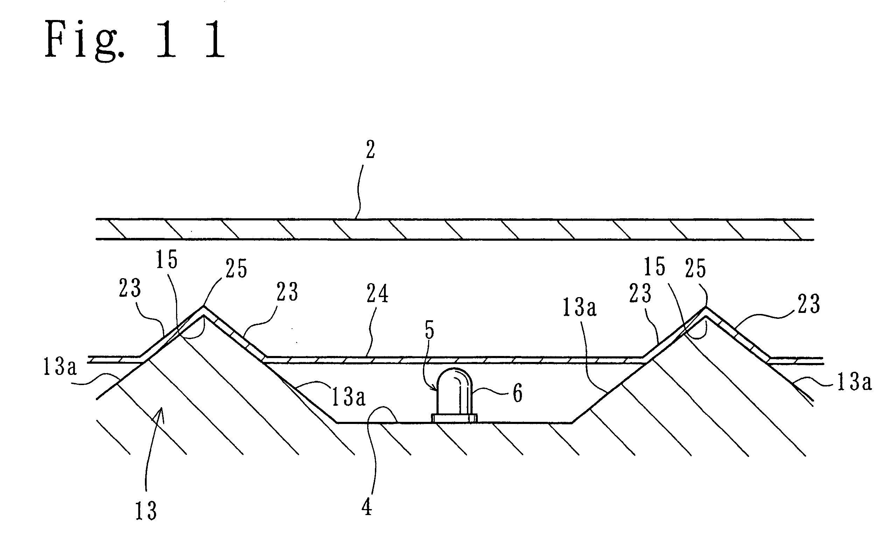

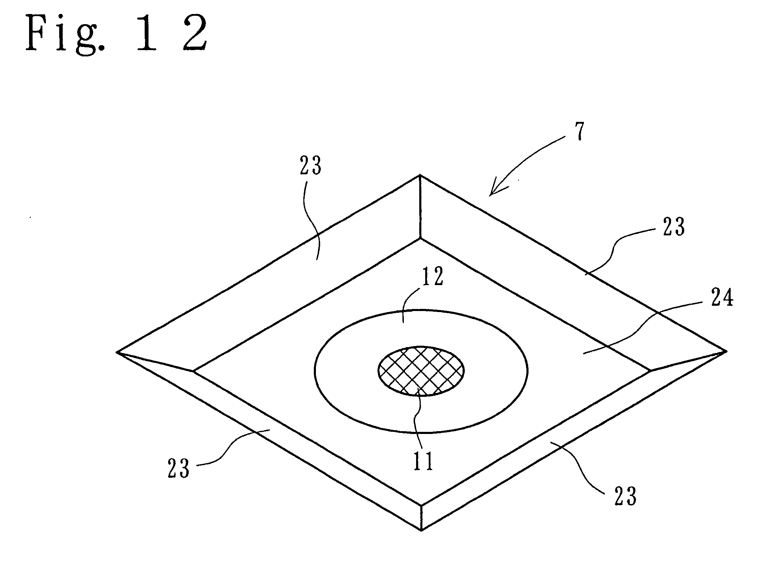

Figs. 9 through 12 show a third embodiment in which the light control means 7 is superposed on the reflector 3. Fig. 9 is an exploded view of a substantial part. Fig. 10 is a view showing part of the light control means from the front side, Fig. 11 is a cross-sectional view showing the installation condition thereof, and Fig. 12 shows a condition of the light control means in one unit structure.

As shown in Figs. 9 and 10, the light control means 7 corresponds to the reflector 3 which is integrated with a number of units, each formed in a square, constructed in the same manner as those shown in Fig. 6. The light control means 7 is formed here as a single body to be directly covered on the reflector 3.

Namely, the light control means 7 is provided with a slope 23 and a ridgeline 25 corresponding to the slope section 13 and the ridgeline 15. The light control means 7 is further provided with an enlarged square bottom section 24 of a similar figure to cover the upper part of the bottom section 4. The slope 23, the ridgeline 25, and the bottom section 24 of the light control means 7 form one unit which is integrally formed in a number corresponding to the number of units of the reflector 3. Such a light control means 7 can be easily formed by irregularly forming a suitable resin film or sheet. In this case, the transmitting diffused reflection area 17 is formed in a position of the bottom section 24 directly above the LED 5 in the same manner as before. The diffused reflection area 18 is concentrically formed around the transmitting diffused reflection area 17.

Further, the bottom section 24 is situated at the intermediate portion of the slope 13a and the slope 23 also continues to the bottom section 24 at this height. In this manner, when the light control means 7 is mounted to cover the reflector 3 so that the ridgeline 25 of the light control means 7 is superposed on the ridgeline 15 of the slope section 13, the slope 23 is superposed on the upper half side of the slope 13a and the bottom section 24 is supported by the slope section 13 to be situated above and away from the bottom section 4. Thus, the difference of elevation H between the installation hole 14 and the ridgeline 15 is maintained.

Fig. 12 shows the light control means 7 of a minimum unit corresponding to one unit of the light control means 7 cut along the ridgeline 25. If a large number of the light control means 7 is provided, even though the number of units on the reflector 3 side changes, it is possible to easily cope with such a change by installing a light control means 7 for each unit. In this case, the slope 23 is superposed only on the one side slope 13a of the slope section 13. However, since each of them forms a taper shape, the light control means 7 is positioned in such a condition that the slope 23 is pressure-contacted with the slope 13a by its own weight. In this manner, the light control means 7 can be easily installed.

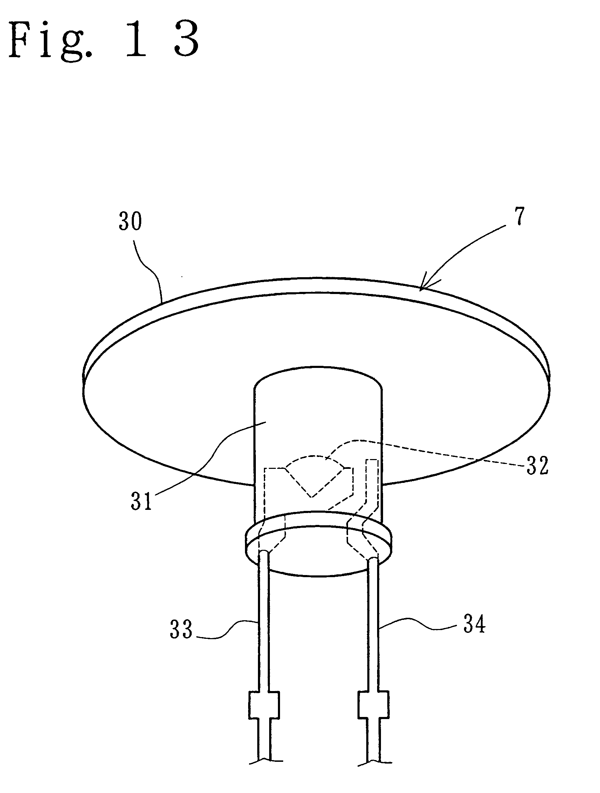

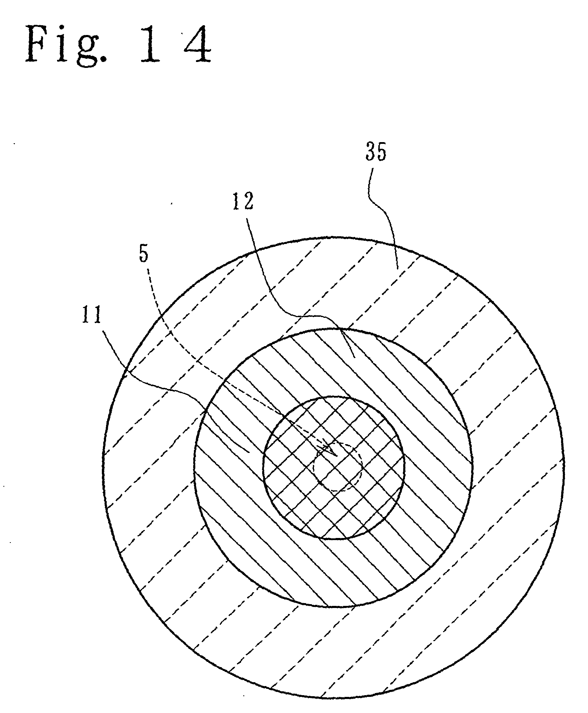

Figs. 13 and 14 show a fourth embodiment in which the light control means 7 is integrated with the LED 5. Fig. 13 is a perspective view thereof. In this example, the light control means 7 is composed of an umbrella section 30 of a circular plate shape and a cylindrical section 31. The cylindrical section 31 serves as a lens section of the LED 5. This LED 5 is a non-lens type. Housed in the cylindrical section 31 which projects from the center of the umbrella section 30 is an LED element 32 to which terminals 33, 34 are connected. The terminals 33, 34 are caused to project outside the LED element 32.

Fig. 14 is a top view of the umbrella section 30 in which the reflecting main section 11 in the center section, the reflecting transmission section 12 around the reflecting main section 11, and the outer end section 35 are graded to change the dot density. The reflecting main section 11, the reflecting transmission section 12, and the outer end section 35 are formed in the same manner as above.

In this manner, since the light control means 7 can be integrally formed with the LED 5, it is not necessary to separately provide and install the light control means 7. As a result, the device can be easily constructed and assembled.

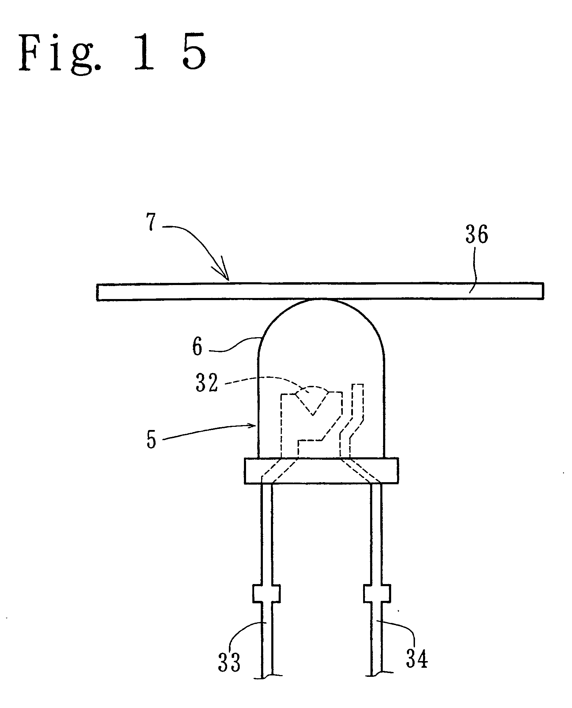

Fig. 15 is a fifth embodiment of the present invention in which the light control means 7 is integrated with the LED 5. In this example, the LED 5 of a lens type is adopted. A circular plate shaped section 36 of the light control means 7 is integrally formed with the lens 6 at the top of the lens 6. Namely, a cylindrical section of the light control means 7 is also used as the lens 6. However, the circular plate shaped section 36 can be made of glass or the like separately from the lens 6 to be deposited on the top section of the lens 6. The structure of the reflecting main section 11, the reflecting transmission section 12 and the like of the light control means 7 is the same as that in Fig. 14.

It should be noted that the present invention is not limited to the above-mentioned embodiments, but can be varied or applied in various manners within the scope of the principle of the same invention. The shape of one unit in the reflector and the light control means is not limited to a square. For example, it can be an equilateral pentagon or an equilateral hexagon. In such a polygon, a number of units can be connected to each other in a honeycomb shape for integration. In this manner, if one unit is formed in a regular polygon, the diffusion panel 2 in each unit can be maintained in the surface-shaped emission (light emitting) condition in which the whole is uniform. Even though there is a number of units, the uniform condition can be maintained without changing the brightness of the light-emitting surface. Accordingly, it is possible to form the surface emission (light emitting) device of a free size in response to popular demand.

The shape of one unit is not a regular polygon, but can be a circular shape. In this case, when a number of units is integrated, the space of a substantially triangular shape is formed between the adjacent 3 units. However, if another unit of a shape corresponding to this space is provided, it can be combined with the unit of a circular shape. Another unit of this case also forms a substantially regular (equilateral) polygon according to the present invention.

## Claims

1. A surface emission device of a subjacent type having a semitransparent diffusion panel disposed in front of a source of light to cause the diffusion panel to emit light from its surface caused by the light from the source of light comprising:
an LED used as the source of light;
a reflector for reflecting the light of the LED; and
a light control means disposed between the LED and the diffusion panel;
wherein the light control means comprises a main reflecting section, for reflecting and transmitting the light of the LED, provided at a position corresponding to the central section of the LED, thereby making the amount of light reflected larger than the amount of light transmitted, and a reflecting transmission section provided around the main reflecting section to make the amount of light transmission larger than in the reflecting main section.

2. The surface emission device according to claim 1, wherein the LED is a lens type, and the light control means is provided with a holder section for covering the outer surface of the lens of the LED and is detachably mounted relative to the LED by the holder section.

3. The surface emission device according to claim 1, wherein the light control means is integrally formed with the LED.

4. The surface emission device according to claim 1, wherein the reflector is provided with a slope section, and the main reflecting section and the reflecting transmission section of the light control means are situated lower than the uppermost section of the slope section.

5. The surface emission (light emitting) device according to claim 4, wherein the light control means is a plate-shaped member which is supported on the slope section of the reflector.

6. The surface emission device according to one of claims 1 through 5, wherein a structure of the reflector consisting of a bottom section on which the LED is mounted and a slope section surrounding the periphery of the bottom section forms one unit of a circular or substantially regular polygonal shape as seen from the direction of an optical axis of the LED, wherein the reflector is constructed using one or more units each provided with the LED and the light control means.
